# EUROPÄISCHE PATENTSCHRIFT

(11) **EP 1 910 596 B1**
(45) Veröffentlichungstag und Bekanntmachung des Hinweises auf die Patenterteilung: **18.03.2009**
(21) Anmeldenummer: 06753261.4
(22) Anmeldetag: 09.06.2006
(51) Int. Cl.: D03D 49/20

(54) **VERBESSERTE REIBSCHEIBENKUPPLUNG FÜR EINEN ANTREIBBAREN WARENBAUM EINER WEBMASCHINE**
IMPROVED FRICTION DISK CLUTCH FOR A DRIVEABLE CLOTH BEAM OF A LOOM
EMBRAYAGE A FRICTION AMELIORE POUR UNE ENSOUPLE D'ENROULEMENT DU TISSU POUVANT ETRE ENTRAINEE D'UN METIER A TISSER

(30) Priorität: 16.07.2005 DE 102005033375
(43) Veröffentlichungstag der Anmeldung: 16.04.2008
(73) Patentinhaber: Lindauer Dornier GmbH, 88129 Lindau (DE)
(72) Erfinder: RENZ, Manuel, 88131 Lindau (DE)
(86) Internationale Anmeldenummer: PCT/DE2006/000991
(87) Internationale Veröffentlichungsnummer: WO 2007/009413

(56) Entgegenhaltungen:
- EP-A- 0 718 426
- PATENT ABSTRACTS OF JAPAN Bd. 2000, Nr. 07, 29. September 2000 (2000-09-29) & JP 2000 096394 A (TOYOTA AUTOM LOOM WORKS LTD), 4. April 2000 (2000-04-04) in der Anmeldung erwähnt
- PATENT ABSTRACTS OF JAPAN Bd. 2000, Nr. 07, 29. September 2000 (2000-09-29) & JP 2000 110051 A (TOYOTA AUTOM LOOM WORKS LTD), 18. April 2000 (2000-04-18) in der Anmeldung erwähnt

## Beschreibung

Die Erfindung betrifft eine druckmittelbetätigbare .Reibscheibenkupplung für einen antreibbaren Warenbaum einer Webmaschine.
Bei Webmaschinen wird die gewebte Ware in der Regel über Warenabzugsrollen abgezogen und auf einem Warenbaum aufgewickelt. Der Warenbaum wird dabei entweder von einem eigenen Motor angetrieben oder der Antrieb wird von einem anderen Antrieb an der Webmaschine abgeleitet.
Die Zugkraft in der Warenbahn soll in der Regel unabhängig vom ansteigenden Durchmesser des Warenwickels konstant gehalten werden, d.h. das vom Antrieb des Warenbaums übertragene Drehmoment muss bei steigendem Durchmesser des Warenwickels größer werden. Um diese Anforderung zu erfüllen werden bevorzugt Reibscheibenkupplungen im Antriebsstrang des Warenbaumes eingesetzt, deren übertragbares Drehmoment durch Verändern der Anpresskraft der Reibscheiben einstellbar ist.

Dazu ist z.B. aus JP2000096394 eine Antriebslösung mit einer pneumatisch betätigten Reibscheibenkupplung bekannt. Hierbei wird das Antriebsdrehmoment für den Warenbaum von einer Warenabzugswalze abgeleitet. Die genannte Kupplung ist dabei im Antriebsstrang zwischen der Warenabzugswalze und dem Warenbaum vorgesehen und auf dem Walzenstummel der Warenabzugswalze angeordnet.

Die vorgenannte Ausführung wird mit der aus JP2000110051 bekannten Erfindung weiter verbessert, indem mittels einer Steuer- und Regeleinrichtung eine Anpassung des Antriebsdrehmomentes des Warenbaumes an den Warenwickeldurchmesser erfolgt.

Bei beiden vorgenannten Lösungen wird die Reibscheibenkupplung von einer separat, neben der Kupplung, angeordneten pneumatischen Kolben-Zylinder-Einheit über ein mechanisches Hebelgestänge betätigt. Eine solche Anordnung erfordert jedoch einen großen Bauraum. Die Übertragung der Betätigungskraft über ein mechanisches Hebelgestänge wirkt sich durch auftretendes Spiel und Reibung an den Gelenkstellen nachteilig auf das Ansprechverhalten und die genaue Reproduzierbarkeit der Warenzugkraft aus. Spiel und Reibung in den Gelenkstellen und die dadurch verursachten nachteiligen Wirkungen nehmen im Laufe der Zeit durch Verschleißerscheinungen zu.

Der Erfindung liegt die Aufgabe zugrunde, eine durch Druckmittel betätigbare Reibscheibenkupplung für einen antreibbaren Warenbaum einer Webmaschine in kompakter Bauweise zu schaffen, wobei die Reibscheibenkupplung eine einfache und reproduzierbare Einstellung der Warenzugkraft ermöglichen soll. Des weiteren soll eine Webmaschine mit einer solchen Reibscheibenkupplung geschaffen werden.

Gelöst wird die genannte Aufgabe erfindungsgemäß durch eine Reibscheibenkupplung und eine Webmaschine mit den Merkmalen der unabhängigen Ansprüche. Zweckmäßige Weiterbildungen sind in den abhängigen Ansprüchen definiert.
Gemäß Anspruch 1 ist der Warenbaumantrieb mit einer Reibscheibenkupplung ausgestattet, welche im Wesentlichen aus folgenden, rotierbar um eine Rotationsachse angeordneten Bauteilen besteht:
- einer antreibbaren äußeren Kupplungsglocke,
- einem axial verschiebbaren Druckteller,
- einem dem Druckteller gegenüberliegend und innerhalb der Kupplungsglocke angeordneten, trommelförmigem Mitnehmerteil,
- einer drehfest mit dem Mitnehmerteil verbundenen Abtriebswelle,
- einem zwischen dem innen angeordneten Mitnehmerteil und der außen angeordneten Kupplungsglocke angeordneten, axial verschiebbaren Kupplungspaket mit wenigstens einer Außenmitnehmerscheibe, mit wenigstens einer Innenmitnehmerscheibe sowie wenigstens einer zwischen jeder Außenmitnehmerscheibe und Innenmitnehmerscheibe angeordneten Reibscheibe,
- einer mit dem Druckteller wirkverbundenen Kolben-Zylinder-Einheit zur Betätigung der Reibscheibenkupplung, wobei der Zylinder der Kolben-Zylinder-Einheit eine bauliche Einheit mit dem Mitnehmerteil bildet.

Die Funktionskopplung in Form eines im Mitnehmerteil integrierten Zylinders reduziert den erforderlichen Bauraum erheblich und verringert zudem die Herstellkosten und die Teilevielfalt der Reibscheibenkupplung und der Webmaschine.

Das Mitnehmerteil ist über die Abtriebswelle vorzugsweise drehfest, jedoch lösbar mit dem Warenbaum verbunden. Die Verbindung zwischen Abtriebswelle und Warenbaum kann z.B. aus einer trennbaren Kupplung oder aus einer stirnverzahnten Getriebestufe bestehen, um ein einfaches Wechseln des Warenbaumes zu ermöglichen.

Durch eine entsprechende Materialauswahl bei den Reibscheiben, kann die Reibungszahl und damit das Übertragungsverhalten der Kupplung vorbestimmt werden. Glatte Oberflächen erfordern einen höheren Druck zur Übertragung eines bestimmten Drehmoments, raue Oberflächen der Reibscheiben erfordern einen geringeren Druck zur Übertragung eines bestimmten Drehmoments. Vorteilhaft sind glatte Oberflächen, weil glatte Oberflächen eine geringere Neigung zu einem Stick-Slip-Verhalten aufweisen.

In einer bevorzugten Ausführung wird die Reibscheibenkupplung pneumatisch betätigt, d.h. der Kolben der Kolben-Zylinder-Einheit ist mit Druckluft beaufschlagbar.
Vorzugsweise ist der auf den Kolben wirkende Druck mittels eines Druckregelventils einstellbar, um so das von der Reibscheibenkupplung übertragene Drehmoment zu regeln. Je höher der eingestellte Druck, desto größer ist die vom Kolben über den Druckteller auf die Reibscheiben übertragene Kraft und desto höher ist das von der Kupplungsglocke über die Reibscheiben und das Mitnehmerteil auf die Abtriebswelle übertragene Drehmoment. Das Drehmoment wird durch die Abtriebswelle zum Warenbaum weitergeleitet und bestimmt die Warenzugkraft in der gewebten Ware beim Aufwickeln. Die Einstellung des Druckregelventils und damit der Warenzugkraft kann manuell oder automatisiert erfolgen. Erfolgt die Druck- und damit Drehmomenteinstellung manuell, dann ist es vorteilhaft das Druckregelventil an einem für das Bedienpersonal leicht zugänglichen Ort anzuordnen, wie z.B. an einem Bedienpult der Webmaschine.

Mit Hilfe der beschriebenen Druckregelung kann das übertragene Drehmoment gemäß einer weiteren bevorzugten Ausführung automatisch, z.B. in Abhängigkeit vom Wickeldurchmesser der Ware auf dem Warenbaum, geregelt werden. Die Anpassung des übertragenen Drehmomentes an den Wickeldurchmesser kann über verschiedene, an sich bekannte, Einrichtungen erfolgen.
Eine einfache Ausführung ist beispielsweise, dass eine am Warenbaum angeordnete Tastrolle den äußeren Durchmesser des Warenwickels abtastet und über mechanische Mittel direkt mit dem Druckregelventil wirkverbunden ist und dieses entsprechend dem ansteigenden Durchmesser des Warenwickels nachstellt.
Eine andere Möglichkeit ist z.B. das Messen der Umdrehungen des Warenbaumes durch einen Impulszähler, welcher ein entsprechendes Signal an eine Steuerung weiterleitet. Von der Steuerung wird dann ein Steuersignal an einen auf das Druckregelventil wirkenden Aktuator übermittelt. Dieses Steuersignal ist u.a. vom Signal des Impulszählers und von der Gewebedicke abhängig. Die Information der Gewebedicke ist dabei vorteilhaft in einem Datenspeicher in der Steuerung abgelegt und wird von der Steuerung dort abgerufen.

Zum Lösen der Reibscheibenkupplung wird der auf die Kolben-Zylinder-Einheit wirksame Druck verringert. Damit sinkt die Anpresskraft der Reibscheiben auf die Mitnehmerscheiben und die Kupplung rutscht durch.
Um den Lösevorgang der Kupplung zu unterstützen und um das Ansprechverhalten der Kupplung zu optimieren kann z.B. eine Druckfeder zwischen dem feststehenden Mitnehmerteil und dem axial verschiebbaren Kolben vorgesehen werden, die gegen die von der Druckluft erzeugten Kolbenkraft wirkt. Die Druckfeder überwindet beim Lösen der Kupplung eventuell entstehende Reibkräfte zwischen bewegten Teilen, wie z.B. Kolbenringen und Zylinderinnenwand. Zum selben Zweck kann eine Druckfeder auch an einer anderen Stelle, beispielsweise zwischen dem Mitnehmerteil und dem Druckteller angeordnet werden. Anstatt der Druckfeder können auch andere energiespeichernde Mittel, wie z.B. eine Teller- oder Zugfeder eingesetzt werden.

In den beschriebenen Ausführungen ist ein Antrieb für den Warenbaum einer Webmaschine geschaffen, der sehr kompakt gebaut ist und allen eingangs genannten Anforderungen genügt. Die integrierte Bauweise minimiert außerdem die Schmutzanfälligkeit der Vorrichtung, da die bewegbaren Bauteile größtenteils von Schmutz- und Staubteilchen wie z.B. gelösten Textilfasern abgeschirmt sind.

Die Erfindung und weitere sich ergebende Vorteile werden nachstehend anhand eines Ausführungsbeispiels näher erläutert.

Die Figur 1 zeigt eine Schnittdarstellung der erfindungsgemäßen Reibscheibenkupplung mit einer schematisch dargestellten Druckluftversorgung.

Figur 2 zeigt eine Außenmitnehmerscheibe aus dem Kupplungspaket.

Figur 3 zeigt eine Innenmitnehmerscheibe aus dem Kupplungspaket.

Figur 4 zeigt eine perspektivische Ansicht des Mitnehmerteils 5.

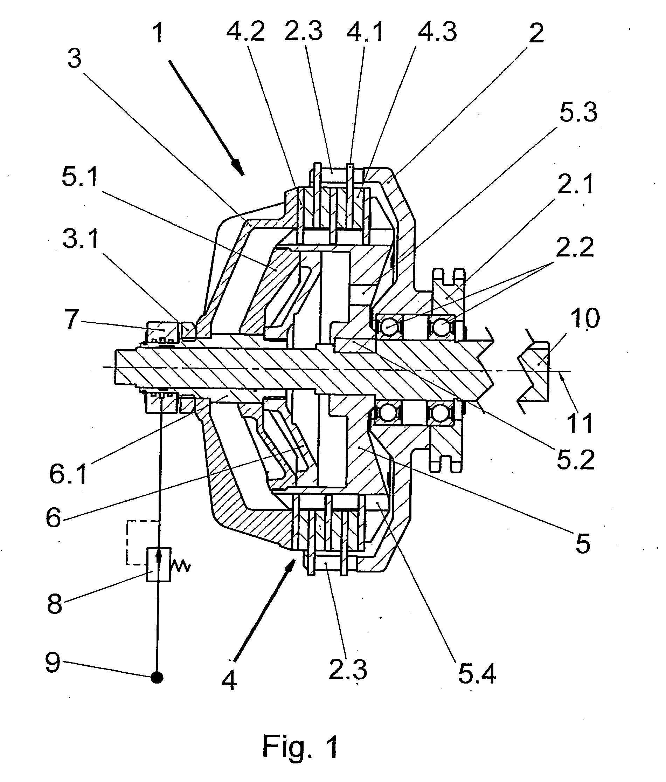

Die in Figur 1 dargestellte Reibscheibenkupplung 1 besteht im Wesentlichen aus einer Kupplungsglocke 2, einem Druckteller 3, einem Kupplungspaket 4, einem mit einer Abtriebswelle 10 starr verbundenen Mitnehmerteil 5 und aus einer zwischen dem Druckteller 3 und dem Mitnehmerteil 5 angeordneten Kolben-Zylinder-Einheit 5, 6. Alle hier genannten Komponenten sind um eine gemeinsame Rotationsachse 11 angeordnet. Der Kolben 6 der Kolben-Zylinder-Einheit 5, 6 ist über eine Kolbenbuchse 6.1 starr mit dem Druckteller 3 verbunden.

Die Kolben-Zylinder-Einheit 5, 6 wird von einer Druckluftquelle 9 über ein Druckregelventil 8, eine Dreheinführung 7 und durch eine nicht dargestellte Nut an der Innenfläche der Kolbenbuchse 6.1 mit Druckluft versorgt. Der so erzeugte Druck in der Kolben-Zylinder-Einheit 5, 6 bewirkt eine Kraft auf den Kolben 6. Diese Kraft wirkt über die starr mit dem Kolben 6 verbundene Kolbenbuchse 6.1 und den damit starr verbundenen Druckteller 3 auf das Kupplungspaket 4. Der Druckteller 3 drückt dabei die Reibscheiben 4.3 gegen die Außenmitnehmerscheiben 4.1 und gegen die Innenmitnehmerscheiben 4.2 und stellt so einen Reibschluss her, sodass das Antriebsdrehmoment für den Warenbaum von der Kupplungsglocke 2 über das Kupplungspaket 4 und das Mitnehmerteil 5 übertragen wird. Das Mitnehmerteil 5 treibt über die drehfest verbundene Abtriebswelle 10 den nicht dargestellten Warenbaum an.

Mittels des manuell einstellbaren Druckregelventils 8 wird die Größe der von der Kolben-Zylinder-Einheit 5, 6 erzeugten Kraft und damit das von der Reibscheibenkupplung 1 übertragbare Drehmoment geregelt. Das übertragbare Drehmoment der Reibscheibenkupplung 1 bestimmt wiederum die beim Aufwickeln der Ware wirkende Warenzugkraft, d.h. der Bediener stellt am Druckregelventil 8 die Warenzugkraft der Ware auf dem Warenbaum ein.

Die Reibscheiben 4.3 und die Mitnehmerscheiben 4.1, 4.2 sind axial frei verschiebbar angeordnet, um die notwendigen axialen Verschiebungen beim Lösen und Verbinden der Reibscheibenkupplung 1 zu ermöglichen. Ein weiterer Vorteil der frei verschiebbaren Reibscheiben 4.3 und Mitnehmerscheiben 4.1, 4.2 ist, dass die Kupplung dadurch nahezu wartungsfrei funktioniert. Ein Verschleiß der Reibbeläge 4.1 wird durch ein axiales Zusammenschieben des Paketes aus Reibscheiben 4.3 und Mitnehmerscheiben 4.1, 4.2 ausgeglichen. Dabei bleibt das Verhältnis zwischen eingestelltem Luftdruck in der Kolben-Zylinder-Einheit 6 und übertragbarem Drehmoment der Reibscheibenkupplung 1 auch bei fortlaufendem Verschleiß der Reibbeläge 4.1 konstant, weil das Kupplungspaket 4 dadurch zwar schmaler wird, die Betätigungskraft vom Druckteller 3 und die wirksame Reibfläche im Kupplungspaket 4 jedoch immer gleich groß bleibt.

Bei der dargestellten Ausführung des Warenbaumantriebes wird ein Drehmoment für den Warenbaumantrieb von einem anderen Antrieb an der Webmaschine abgeleitet. Ein Kettentrieb überträgt das Drehmoment auf die Kupplungsglocke 2 der Reibscheibenkuppfung 1. Die Kupplungsglocke 2 ist dazu mit einem Kettenrad 2.1 ausgestattet. Die Kupplungsglocke 2 ist mittels zweier Wälzlager 2.2 frei drehbar auf der Abtriebswelle 10 gelagert. Im eingekuppelten Zustand der Reibscheibenkupplung 1 erfolgt jedoch keine Relativbewegung zwischen Kupplungsglocke 2 und Abtriebswelle 10. Nur im ausgekuppelten Zustand rotiert die Kupplungsglocke 2 relativ zur Abtriebswelle 10 um die Rotationsachse 11.
Die vorliegende Erfindung beschränkt sich jedoch nicht auf diese Ausführungsform, sondern ist auch mit einem eigenen Antriebsmotor für den Warenbaumantrieb ausführbar, welcher Antriebsmotor die Kupplungsglocke 2 der Reibscheibenkupplung 1 entweder direkt oder über eine dazwischengeschaltete Getriebestufe antreibt. Bei erfindungsgemäßen Lösungen mit eigenem oder abgeleitetem Antrieb können verschiedene Übertragungsmittel für das Drehmoment vorgesehen werden wie z.B. Riementriebe oder Stirnradantriebe.

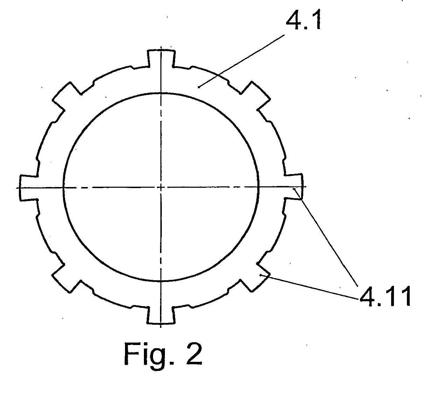

In der Figur 2 ist eine Außenmitnehmerscheibe 4.1 aus dem Kupplungspaket 4 dargestellt. Die Außenmitnehmerscheibe 4.1 weist am Außenumfang Laschen 4.11 auf, welche im eingebauten Zustand in die Nuten 2.3 der Kupplungsglocke 2 eingreifen und so eine drehfeste Verbindung zwischen der außen angeordneten Kupplungsglocke 2 und der Außenmitnehmerscheibe 4.1 herstellen.

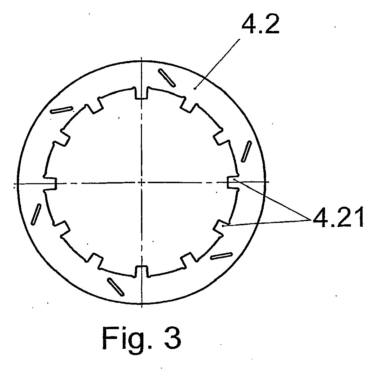

In der Figur 3 ist eine Innenmitnehmerscheibe 4.2 aus dem Kupplungspaket 4 dargestellt. Die Innenmitnehmerscheibe 4.2 weist am Innenumfang Laschen 4.21 auf, welche im eingebauten Zustand in die Nuten 5.4 des Mitnehmerteils 5 eingreifen und so eine drehfeste Verbindung zwischen der Innenmitnehmerscheibe 4.2 und dem Mitnehmerteil 5 herstellen.
Bei eingekuppeltem Betrieb wird das Kupplungspaket 4 zusammengedrückt und es besteht ein Reibschluss zwischen Außenmitnehmerscheiben 4.1, Reibscheiben 4.3 und Innenmitnehmerscheiben 4.2. Damit ist die Kupplungsglocke 4 drehfest mit der Abtriebswelle 10 verbunden und das auftretende Antriebsdrehmoment wird auf den Warenbaum übertragen.

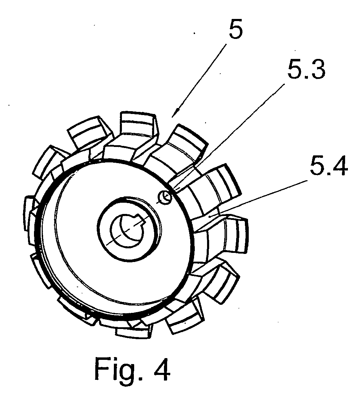

In der Figur 4 ist das Mitnehmerteil 5 in einer perspektivische Ansicht dargestellt. Die Entlüftungsbohrung 5.3 sorgt für einen Druckausgleich zwischen dem kolbenrückseitigen Zylinderinnenraum und der Umgebung, wenn sich der Kolben 6 beim Betätigen der Reibscheibenkupplung 1 bewegt.

## Patentansprüche

1. Druckmittelbetätigbare Reibscheibenkupplung (1) für einen antreibbaren Warenbaum einer Webmaschine, im Wesentlichen bestehend aus folgenden, rotierbar um eine Rotationsachse (11) angeordneten Bauteilen:
einer antreibbaren Kupplungsglocke (2),
einem relativ zur Kupplungsglocke axial verschiebbaren Druckteller (3),
einem dem Druckteller (3) gegenüberliegend und innerhalb der Kupplungsglocke (2) angeordneten Mitnehmerteil (5),
einer drehfest mit dem Mitnehmerteil (5) verbundenen Abtriebswelle (10),
einem zwischen dem Außenumfang des innen angeordneten Mitnehmerteils (5) und dem Innenumfang der außen angeordneten Kupplungsglocke (2) angeordneten Kupplungspaket (4), mit wenigstens einer drehfest zur Kupplungsglocke (2) axial verschiebbar angeordneten Außenmitnehmerscheibe (4.1), mit wenigstens einer drehfest zum Mitnehmerteil (5) axial verschiebbar angeordneten Innenmitnehmerscheibe (4.2) sowie wenigstens einer zwischen jeder Außenmitnehmerscheibe (4.1) und Innenmitnehmerscheibe (4.2) axial verschiebbar angeordneten Reibscheibe (4.3) und
einer mit dem Druckteller (3) wirkverbundenen Kolben-Zylinder-Einheit (5, 6) zur Betätigung der Reibscheibenkupplung (1),
**dadurch gekennzeichnet, dass** der Zylinder der Kolben-Zylinder-Einheit (5, 6) und das Mitnehmerteil (5) als ein Bauteil ausgebildet sind.

2. Reibscheibenkupplung nach Anspruch 1, **dadurch gekennzeichnet, dass** die Kolben-Zylinder-Einheit (5, 6) mit Druckluft beaufschlagbar ist.

3. Reibscheibenkupplung nach Anspruch 1, **dadurch gekennzeichnet, dass** das Kupplungspaket (4) durch Druckbeaufschlagung der Kolben-Zylinder-Einheit (5, 6) zusammengedrückt wird, wobei die Reibscheibenkupplung (1) ein von der Höhe des Drucks abhängiges Drehmoment überträgt.

4. Reibscheibenkupplung nach Anspruch 1, **dadurch gekennzeichnet, dass** ein Druck, der auf den Kolben (6) der Kolben-Zylinder-Einheit (5, 6) wirksam wird, mittels eines Druckregelventils (8) einstellbar ist.

5. Reibscheibenkupplung nach Anspruch 4, **dadurch gekennzeichnet, dass** der von dem Druckregelventil (8) eingestellte Druck in Abhängigkeit von der Veränderung des Warenwickeldurchmessers auf dem Warenbaum regelbar ist.

6. Webmaschine mit einem antreibbaren Warenbaum und mit einer Reibscheibenkupplung im Antriebsstrang des Warenbaums, **dadurch gekennzeichnet, dass** die Reibscheibenkupplung nach einem der vorgenannten Ansprüche ausgebildet ist.

## Claims

1. Pressure medium actuatable friction disk clutch (1) for a drivable cloth beam of a loom, essentially consisting of the following components that are arranged rotatably about a rotation axis (11):
a drivable clutch bell housing (2),
a pressure plate (3) that is axially slidably displaceable relative to the clutch bell housing,
an engagement part (5) lying opposite the pressure plate (3) and arranged within the clutch bell housing (2),
a driven shaft (10) connected fixedly for rotation with the engagement part (5),
a clutch packet (4) arranged between the outer circumference of the inwardly arranged engagement part (5) and the inner circumference of the outwardly arranged clutch bell housing (2), with at least one outer engagement disk (4.1) that is arranged axially slidably displaceable and fixed for rotation with the clutch bell housing (2), with at least one inner engagement disk (4.2) arranged axially slidably displaceable and fixed for rotation with the engagement part (5), as well as at least one friction disk (4.3) arranged axially slidably displaceable between each outer engagement disk (4.1) and inner engagement disk (4.2), and
a piston-cylinder unit (5, 6), which is for the operation of the friction disk clutch (1), and which is operatively connected with the pressure plate (3),
**characterized in that** the cylinder of the piston-cylinder unit (5, 6) and the engagement part (5) are embodied as one component.

2. Friction disk clutch according to claim 1, **characterized in that** the piston-cylinder unit (5, 6) can be acted on with compressed air.

3. Friction disk clutch according to claim 1, **characterized in that** the clutch packet (4) is pressed together by pressure acting on the piston-cylinder unit (5, 6), whereby the friction disk clutch (1) transmits a torque dependent on the magnitude of the pressure.

4. Friction disk clutch according to claim 1, **characterized in that** a pressure, which becomes effective on the piston (6) of the piston-cylinder unit (5, 6) is adjustable by means of a pressure regulating valve (8).

5. Friction disk clutch according to claim 4, **characterized in that** the pressure adjusted by the pressure regulating valve (8) is regulatable dependent on the change of the cloth roll diameter on the cloth beam.

6. Loom with a drivable cloth beam and with a friction disk clutch in the drive train of the cloth beam, **characterized in that** the friction disk clutch is embodied according to one of the preceding claims.

## Revendications

1. Accouplement (1) à disque de friction, actionné par fluide sous pression, pour l'arbre d'ensouple entraîné d'un métier à tisser, essentiellement constitué des composants suivants disposés à rotation autour d'un axe de rotation (11) :
une cloche d'accouplement (2) entraînée,
un plateau de poussée (3) apte à coulisser axialement par rapport à la cloche d'accouplement,
une pièce d'entraînement (5) disposée face au plateau de poussée (3) à l'intérieur de la cloche d'accouplement (2),
un arbre entraîné (10) relié à rotation solidaire à la pièce d'entraînement (5),
une garniture d'accouplement (4) disposée entre la périphérie extérieure de la pièce d'entraînement (5) disposée à l'intérieur et la périphérie intérieure de la cloche d'accouplement (2) disposée à l'extérieur, et dotée d'au moins un disque extérieur d'entraînement (4.1) disposé de manière à pouvoir coulisser axialement à rotation solidaire par rapport à la cloche d'accouplement (2), au moins un disque intérieur d'entraînement (4.2) disposé de manière à pouvoir coulisser axialement à rotation solidaire par rapport à la pièce d'entraînement (5) et au moins un disque de friction (4.3) disposé de manière à pouvoir coulisser axialement entre chaque disque extérieur d'entraînement (4.1) et chaque disque intérieur d'entraînement (4.2) et
une unité à piston et cylindre (5, 6) reliée fonctionnellement au plateau de poussée (3) pour actionner l'accouplement (1) à disque de friction,
**caractérisé en ce que**
le cylindre de l'unité à piston et cylindre (5, 6) et la pièce d'entraînement (5) sont réalisés sous la forme d'un seul composant.

2. Accouplement à disque de friction selon la revendication 1, **caractérisé en ce que** l'unité à piston et cylindre (5, 6) est actionnée par de l'air comprimé.

3. Accouplement à disque de friction selon la revendication 1, **caractérisé en ce que** la garniture d'accouplement (4) est comprimée lorsque l'unité à piston à piston et cylindre (5, 6) y applique une poussée, l'accouplement à disque de frottement (1) transmettant un couple de rotation qui dépend du niveau de poussée.

4. Accouplement à disque de friction selon la revendication 1, **caractérisé en ce que** la pression qui agit sur le piston (6) de l'unité à piston et cylindre (5, 6) peut être ajustée au moyen d'une soupape (8) de régulation de pression.

5. Accouplement à disque de friction selon la revendication 4, **caractérisé en ce que** la pression réglée par la soupape (8) de régulation de pression peut être régulée en fonction de la variation du diamètre du tissu enroulé sur l'ensouple à tissu.

6. Métier à tisser doté d'une ensouple à tissu entraînée et d'un accouplement à disque de friction prévu dans le train d'entraînement de l'ensouple à tissu, **caractérisé en ce que** l'accouplement à disque de friction est configuré selon l'une des revendications précédentes.
